# DEMANDE DE BREVET EUROPEEN

(11) **EP 4 282 267 A1**
(43) Date de publication de la demande: **29.11.2023**
(21) Numéro de dépôt: 23174640.5
(22) Date de dépôt: 22.05.2023
(51) Int. Cl.: A01M 7/00

(54) **SYSTÈME DE PULVÉRISATION COMPRENANT DES MOYENS DE DÉTECTION DE SURFACE FOLIAIRE**

(30) Priorité: 23.05.2022 FR 2204939; 04.08.2022 FR 2208080
(71) Demandeur: SC OPTIMA, 62620 Ruitz (FR)
(72) Inventeur: Houssard, Olivier, 62232 Fouquières-les-Béthune (FR)
(74) Mandataire: RVDB

(57) **Abrégé**

L'invention concerne un système de pulvérisation (100), pour véhicule du type pulvérisateur (200) se déplaçant sur une surface comprenant un alignement de végétaux (A1, A2, A3) à traiter, comportant : - au moins une descente (D1, D2, D3, D4) équipée d'au moins une buse (B1, B2, B3, B4, B5, B6, B11, B12, B22, B23, B33, B34) pour asperger un liquide de pulvérisation, ledit système (100) comportant : a) un module de détection (10) comprenant au moins un capteur de surface foliaire (C, C1, C2, C3, C4, C5, C6, C11, C21) associé à ladite au moins une buse pour détecter la présence d'une prochaine section verticale (V1_{H}(t+1), V1_{M}(t+1), V1_{B}(t+1)) ; et b) une unité de pilotage (30) pour piloter indépendamment l'activation de ladite au moins une buse sur réception d'un signal de présence d'une prochaine section (V1_{H}(t+1), V1_{M}(t+1), V1_{B}(t+1)) à traiter.

## Description

### Domaine technique

La présente invention concerne le domaine de la pulvérisation.

L'objet de la présente invention concerne plus particulièrement un système de pulvérisation comprenant des moyens de détection de surface foliaire mettant en oeuvre une technologie de de capteurs configurés pour une détection précise de la surface foliaire à traiter et une aspersion optimale de celle-ci.

La présente invention trouvera de façon non-exclusive des applications avantageuses dans le domaine agricole et/ou viticole et/ou arboricole en équipant un engin du type véhicule d'épandage comprenant des rampes de pulvérisation verticales et/ou horizontales (ou tout système équivalent) équipées d'une pluralité de buses de pulvérisation.

### Art antérieur

On connaît dans le domaine agricole et/ou viticole et/ou arboricole les pulvérisateurs.

Les pulvérisateurs sont classiquement destinés à pulvériser sur les cultures des produits sous forme de liquide.

On parle également d'intrants.

De tels pulvérisateurs sont par exemple utilisés pour appliquer sur les cultures des engrais pour désherber ou encore pour traiter les cultures contre certaines maladies et/ou lutter contre certains insectes (insectes, acariens, etc.) qui sont susceptibles de nuire à la récolte.

Un pulvérisateur comporte généralement un réservoir de stockage contenant le liquide à pulvériser ; ce réservoir est raccordé à un circuit équipé d'une pompe (ou équivalent) et d'une ou plusieurs buses de pulvérisation capables d'asperger le végétal dudit liquide, l'objectif étant la protection des cultures en recouvrant de façon sensiblement homogène l'ensemble du végétal avec une substance active (souvent chimique).

De tels pulvérisateurs peuvent équiper un véhicule motorisé de type par exemple un tracteur, un automoteur, enjambeur ou encore un aéronef (autonome ou non).

On parle de véhicules d'épandage robot ou chenillard.

Cette lutte pour protéger les cultures a fonctionné plusieurs décennies sans réelle norme ni contrôle.

Cependant, ces dernières années, sous la pression environnementaliste, les effets secondaires de ces substances actives ont été reconnus comme nuisibles, voire dangereuses pour l'homme et la nature.

L'utilisation de ces substances est désormais encadrée ; il convient de répondre à de nombreuses réglementations visant à limiter l'utilisation de ces substances et veiller à une application maîtrisée.

Ceci soulève de nombreux défis technologiques dans le domaine de la pulvérisation avec des problématiques visant à optimiser la pulvérisation de manière à proposer une pulvérisation localisée ciblant uniquement la culture à traiter selon les doses de substance recommandées. Plusieurs solutions ont ainsi émergé ces dernières années pour tenter de limiter cette pulvérisation.

Parmi ces solutions, l'un des axes de recherche envisagés a été de mettre au point des capteurs permettant de reconnaître les plantes voire les maladies et ainsi d'adapter le traitement aux caractéristiques du végétal à traiter.

Les capteurs développés jusqu'à présent sont relativement complexes et intègrent des technologies innovantes telles que de l'intelligence artificielle et d'autres techniques plus ou moins coûteuses.

Leurs intégrations sur les pulvérisateurs existants nécessitent cependant des adaptations complexes lesquelles constituent un véritable frein à leur développement.

On connaît également le document FR3099886 qui propose l'utilisation une technologie de capteurs à ultrasons.

L'étude de ce document met en évidence qu'une solution de coupure automatique de la pulvérisation par détection de feuillage avec les capteurs proposés ne peut pas :
- s'adapter simplement sur les pulvérisateurs existants ; et
- travailler correctement de manière autonome sans un interfaçage direct avec la régulation de pulvérisation, partie centrale du fonctionnement d'un pulvérisateur.

Le Demandeur soumet en outre que la solution décrite dans le document FR3099886 se limite à la viticulture et présente de nombreux défauts ; cette solution nécessite :
- une installation complexe nécessitant au moins neuf vannes par descente en version « trois hauteurs » ;
- une installation complexe nécessitant au moins douze vannes par descente en version « quatre hauteurs ».

Par ailleurs, cette solution ne prévoit pas d'interconnexion avec le système de régulation du pulvérisateur d'origine, ce qui présente les conséquences suivantes :
- la surface travaillée calculée par la régulation est erronée ;
- le litage épandu mesuré par la régulation est erroné ; et
- la traçabilité est tronquée.

Le Demandeur soumet en outre que la solution proposée par le document FR3099886 ne prend pas en considération l'information relative à la vitesse du véhicule d'épandage, ce qui présente les inconvénients suivants :
- il n'est pas possible de couper automatiquement la pulvérisation à vitesse nulle (arrêt) ;
- il n'est pas possible d'optimiser les ouvertures/fermetures automatiques des buses en fonction de la vitesse d'avancement ; et
- il n'est pas possible de prévoir une fonction permettant un passage en manuel en cas de défaillance d'une ou plusieurs buses et/ou en cas de défaillance d'un ou plusieurs capteurs à ultrasons.

Le Demandeur soulève encore d'autres inconvénients avec la solution proposée dans le document FR3099886 comme par exemple :
- le fait que le système de détection à ultrasons dans le document FR3099886 est mono-cellule et présente donc une zone morte de détection ;
- le fait que celui-ci ne propose pas un mode dégradé pour repasser en manuel en cas de défaillance ;
- le fait que le système de vanne de retour est à recalibrer hauteur par hauteur si l'utilisateur change de type de buse :
- le fait que la constitution du jet est en retard par rapport à la cible à traiter.
- le fait que le déclenchement en termes de position par rapport à la végétation est aléatoire puisqu'il ne prend pas en compte la vitesse d'avancement de l'engin.

Aussi, le Demandeur soumet que, pour les raisons ci-dessus, les pulvérisateurs qui sont connus jusqu'à présent pour la détection foliaire et notamment le pulvérisateur proposé dans le document FR3099886 ne sont pleinement satisfaisants et ne répondent pas aux exigences attendues dans le domaine de la pulvérisation pour avoir une pulvérisation optimale répondant aux différentes normes et réglementations visant à réduire l'utilisation des intrants (et plus particulièrement les substances chimiques) pour des raisons sanitaires, écologiques et environnementales.

### Objet de l'invention

La présente invention vise à améliorer la situation décrite ci-dessus

La présente invention vise notamment à remédier à au moins l'un des différents problèmes techniques mentionnés ci-dessus en proposant une solution de pulvérisation optimale qui se s'adapte au type de culture à traiter et qui détecte avec précision la surface foliaire à traiter. Selon un premier aspect, l'objet de la présente invention concerne un système de pulvérisation buse à buse pour véhicule du type pulvérisateur se déplaçant sur une surface (agricole/viticole/arboricole par exemple) comprenant au moins un alignement de végétaux à traiter.

Par alignement de végétaux, on entend dans toute la présente description qui suit une succession de végétaux qui, en fonction par exemple du type de culture et de végétaux, sont disposés entre eux les uns derrière les autres en rangée (par exemple rectiligne, courbe ou autre) et espacés entre eux à intervalle régulier ou non (en fonction par exemple du type de culture et de végétaux).

Selon l'invention, le système comporte au moins une rampe de pulvérisation verticale (ou descente) équipée d'au moins une buse agencée pour asperger un liquide de pulvérisation selon une axe de pulvérisation déterminée sensiblement perpendiculaire au sens de déplacement du véhicule.

Avantageusement, le système selon la présente invention comporte un module de détection comprenant au moins un capteur de surface foliaire associé à l'au moins une buse et configuré pour détecter la présence ou non d'une prochaine section verticale de l'alignement de végétaux à traiter dans l'axe de pulvérisation de l'au moins une buse.

Avantageusement, le système selon la présente invention comporte en outre une unité de pilotage configurée pour piloter indépendamment l'activation de l'au moins une buse sur réception d'un signal de présence de la prochaine section à traiter.

Dans un mode de réalisation préférée, le système selon la présente invention comprend une unique rampe verticale. On parle d'un mode mono-rampe, appelé aussi mono-rang.

Dans ce mode mono-rampe, la rampe est équipée d'au moins une buse agencée sur chacune des deux faces latérales de la rampe de manière à ce que le déplacement de la rampe entre deux alignements de végétaux permet l'aspersion des végétaux à traiter.

Ce mode est préféré pour être adapté sur les véhicules légers afin de traiter les petites surfaces.

Dans un autre mode de réalisation préféré, le système selon la présente invention comprend au moins une paire de rampes verticales.

Avantageusement, chaque paire de rampes comprend une première et une deuxième rampes équipées chacune d'au moins une buse, lesdites au moins une buse des première et deuxième rampes formant ensemble une paire de buses en regard les unes par rapport aux autres pour asperger le liquide de pulvérisation sur la section verticale d'une portion de l'alignement de végétaux.

Avantageusement, l'unité de pilotage est configurée pour piloter indépendamment l'activation de chaque paire de buses sur réception d'un signal de présence d'une prochaine section à traiter.

Grâce à la présente invention, il est possible d'asperger avec précision la ou les sections verticales du végétal à traiter par un pulvérisateur qui se déplace le long des alignements de végétaux à traiter.

Dans un mode de réalisation avantageux de la présente invention, le capteur de surface foliaire est du type capteur à ultrasons lequel est capable de détecter par ultrasons la présence d'une prochaine section verticale à traiter dans un cône de détection déterminé.

On comprend que le capteur utilisé ici dans le cadre de la présente met en oeuvre une technologie de détection par ultrasons. Ici, le principe d'une telle technologie par ultrasons est d'émettre un signal (ultrason) selon un cône de détection déterminé et de récupérer l'écho de celui-ci pour détecter un éventuel obstacle rencontré par le signal émis tel que par exemple une surface foliaire à traiter.

L'utilisation de cette technologie par ultrasons permet un filtrage visant à éliminer la détection des petits obstacles tels que par exemple les fils de fer.

Selon ce principe, le temps parcouru par le signal ultrason (aller/retour) entre son émission et sa réception, comparé à la vitesse du son, permet de déterminer la distance réelle parcourue (aller/retour) par le signal entre son émission et sa réception. Cette distance parcourue permet de déduire la distance réelle entre le capteur et la surface à traiter ; celle-ci correspond en effet à la moitié de la distance parcourue par le signal (aller/retour).

Préférentiellement, chaque capteur à ultrasons comprend une cellule émettrice apte à émettre un signal à ultrasons selon un cône de détection déterminé et une cellule réceptrice apte à recevoir le signal à ultrasons en écho du signal émis.

Le capteur prévu dans cet exemple n'est donc pas un simple capteur mono-cellule tel que celui proposé dans le document FR3099886, mais un capteur bi-cellule comprenant deux cellules dont une cellule émettrice et une cellule réceptrice.

Le Demandeur soumet que l'utilisation d'un capteur mono-cellule tel que proposé dans le document FR3099886 avec une seule cellule dédiée à la fois à l'émission et la réception est source d'erreur.

Ce type de technologie mono-cellule induit cependant une zone de détection dite morte.

En effet, un tel capteur mono-cellule ne permet pas une détection précise : le temps consacré pour émettre la trame de signal ainsi que le temps consacré par la cellule après la réception du signal (la cellule raisonne encore quelques microsecondes après réception du signal reçu) induisent une erreur correspondant à cette zone morte durant laquelle le capteur ne peut pas détecter la présence ou non de la surface à traiter.

Ces microsecondes sont ici précieuses et rendent l'utilisation des capteurs mono-cellule impropre au cas d'usage de la pulvérisation qui exigent une haute précision dans la détection. L'utilisation d'un capteur à ultrasons avec deux cellules dont une cellule émettrice et une cellule réceptrice permet de réduire considérablement le temps de réponse du capteur mono-cellule, ce qui permet de limiter considérablement la zone morte et de la réduire à son minimum.

Avec un technologie mono-cellule, la zone de détection morte est comprise entre 0 et 30 centimètres. En revanche, la technologie bi-cellule utilisée dans le cadre de la présente invention permet de réduire cette zone morte à moins de 1 centimètre, voire au touché. Ceci est particulièrement intéressant lorsque par exemple le pulvérisateur sort de son axe de travail et dévie sa trajectoire pour se rapprocher trop près d'un végétal à traiter.

Il est décrit ci-dessus l'utilisation de capteurs à ultrasons. L'homme du métier comprendra ici qu'il est envisageable dans le cadre de la présente invention d'utiliser d'autres types de capteurs tels que par exemple des capteurs du type laser, lidar, radar hyperfréquence, capteur infrarouge capable de détecter la chaleur émise par le végétal ou encore caméra. Préférentiellement, le module de détection comprend des moyens de filtrage configurés pour filtrer les signaux reçus en écho en fonction d'une distance déterminée. Un tel filtre de distance permet notamment de ne recevoir que les échos provenant d'une distance inférieure à une distance seuil prédéterminée.

Ceci s'applique pour les capteurs listés ci-dessus avec une émission et une réception de signal.

Avec un tel filtrage, il devient possible d'éliminer les détections intempestives liées à la présence de petits obstacles comme par exemple celles relatives à la présence de fils de fer. Sans un tel filtre de distance, le capteur à ultrasons est susceptible de recevoir en écho des signaux provenant d'autres capteurs, ce qui pourraient induire des erreurs de détection. Ceci est particulièrement vrai pour la détection de surface foliaire dans la mesure où la réverbération des signaux sur une feuille peut être aléatoire en fonction de l'inclinaison de la feuille et sa forme souvent irrégulière.

Dans un mode de réalisation avantageux de la présente invention, le module de détection comprend, pour chaque paire de rampes, un unique capteur de surface foliaire positionné en partie médiane d'un support horizontal (poutre ou rampe horizontale) reliant par le dessus les première et deuxième rampes verticales (ou descentes), ledit capteur de surface foliaire étant orienté vers le bas.

Dans ce mode, un seul capteur est donc utilisé pour chaque paire de rampes verticales. Ce capteur est positionné entre les deux rampes verticales sensiblement au milieu du support horizontal reliant les deux rampes verticales par le dessus.

On comprend ici que le capteur est en surplomb du végétal à traiter et permet ainsi lors du déplacement du véhicule de détecter par le dessus la présence de la surface foliaire à traiter. Dans ce mode, on prévoit de préférence que le capteur de surface foliaire est configuré pour fournir une information relative à une hauteur de la portion de l'alignement de végétaux à traiter de manière à ce que l'unité de pilotage pilote l'activation de la ou des paires de buses capables d'asperger ladite portion sur toute ladite hauteur.

En effet, comme expliqué précédemment, le capteur permet de détecter la présence du végétal par le dessus. Il est donc souhaitable de traiter l'information relative à la distance parcourue par le signal pour déterminer une hauteur de la portion de l'alignement de végétaux à traiter. Cette hauteur, une fois déterminée, permet de déterminer les paires de buses à activer pour asperger correctement la portion sur toute sa hauteur.

Dans un autre mode de réalisation avantageux de la présente invention, le module de détection comprend, pour chaque paire de buses, un capteur de surface foliaire positionné au voisinage de l'une des deux buses.

On comprend ici qu'il s'agit d'un mode où chaque paire de buses est couplé avec un unique capteur.

En d'autres termes, dans ce mode dans lequel le module de détection comprend un unique capteur de surface foliaire pour chaque paire de buses, on dispose d'un capteur par paire de buses.

Ceci est particulièrement adapté par exemple pour une pulvérisation sur des plans de vigne. Dans un autre mode de réalisation, le module de détection comprend un capteur de surface foliaire couplé à chacune des buses.

Ainsi, on peut prévoir un mode dans lequel le module de détection comprend pour chaque paire de buses, deux capteurs de surface foliaire positionnés chacun au voisinage respectivement de l'une des deux buses.

En d'autres termes, dans ce mode dans lequel le module de détection comprend deux capteurs de surface foliaire pour chaque paire de buses, on dispose d'un capteur pour chaque buse. Ceci est particulièrement adapté pour l'arboriculture.

On notera que, pour un système mono-rampe ou mono-rang, il est préférable de coupler chaque buse avec un capteur.

Il est avantageusement prévu que le module de détection comprend des moyens d'activation configurés pour activer chaque capteur de surface foliaire indépendamment les uns des autres. Préférentiellement, les moyens d'activation sont configurés pour activer de façon asynchrone les capteurs de surface foliaire associés à des buses adjacentes ou des paire de buses adjacentes.

Une telle activation asynchrone des capteurs permet d'éviter des ouvertures intempestives des buses suite à une erreur de détection. En effet, si tous les capteurs fonctionnent simultanément, il est tout à fait possible qu'un des capteurs reçoit un écho émis par un autre capteur, par exemple l'écho d'un signal émis par un capteur voisin dont la distance de séparation reste cohérente avec le capteur.

Par un pilotage asynchrone des capteurs associés aux buses adjacente ou aux paires de buses adjacentes, il devient possible d'alterner les émissions de signaux entre les capteurs adjacents (ou voisins) et d'éviter le phénomène de recouvrement des cônes de détection qui est souvent source d'erreur de détection.

Avantageusement, les moyens d'activation sont configurés pour activer les capteurs de surface foliaire selon une fréquence d'activation modulée en fonction d'au moins un paramètre déterminé tel que la vitesse de déplacement du système et/ou le type de buse. Préférentiellement, la fréquence d'activation est comprise entre 30 et 100Hz. Une telle fréquence garantit une bonne précision dans la détection et le déclenchement de la pulvérisation.

Alternativement, les moyens d'activation sont configurés pour que chaque capteur de surface foliaire émette de façon synchrone selon une fréquence d'émission déterminée différente. On comprend selon cette alternative que chaque capteur est alors capable d'émettre et de recevoir un signal selon une fréquence d'émission qui lui est propre et qui est différente des fréquences des signaux émis par les autres capteurs. Les capteurs peuvent alors fonctionner simultanément sans erreur de détection.

Avantageusement, l'au moins un capteur de surface foliaire est positionné en aval du sens de déplacement par rapport aux paires de buses. En d'autres termes, on comprend ici que chaque capteur se positionne avant les buses par rapport au sens de déplacement de manière à pouvoir anticiper la détection de surface et ainsi tenir compte de la vitesse de déplacement du véhicule d'épandage et du temps nécessaire aux capteurs pour la détection.

Préférentiellement, l'au moins un capteur de surface foliaire est orienté selon un angle d'incidence compris entre 0 et 50 degrés par rapport à un axe de pulvérisation des buses, de préférence 15 degrés.

On comprend ici que le capteur de surface foliaire (par exemple les cellules de celui-ci) est orienté avec une inclinaison vers l'avant du système dans le sens de déplacement de celui-ci de manière à anticiper les cycles de détection.

Un angle d'incidence sensiblement égal à 15 degrés (plus ou moins 5 degrés par exemple) permet de tenir compte des paramètres ci-dessus pour une bonne précision de détection tenant compte des paramètres ci-dessus.

Cet angle est connu du calculateur pour déterminer avec précision l'anticipation du déclenchement de la buse.

Il est également possible de déterminer cet angle en fonction de la vitesse de déplacement et des propriétés du matériel utilisé telles que par exemple les temps de détection et de pilotage des buses et/ou des capteurs.

Dans un mode de réalisation avantageux qui peut être combiné avec les précédents modes ci-dessus, les buses sont à débit fixe.

Dans un mode de réalisation avantageux qui peut être combiné avec les précédents modes ci-dessus, les buses sont à débit variable.

Préférentiellement, les buses sont du type ON/OFF et présentent idéalement un volume de chambre très réduit, dit volume mort, pour être efficace et permettre un jet parfait instantanément.

Préférentiellement, les buses sont du type PWM et sont pilotées électriquement par l'unité de pilotage laquelle est capable de moduler la durée d'ouverture de chaque buse lors d'un cycle d'ouverture/fermeture de ladite buse.

L'utilisation de la technologie PWM permet ainsi de moduler la dose par exemple en fonction de la variation de vitesse d'avancement de la machine (par exemple : montée d'un coteau en vitesse lente - descente d'un coteau en vitesse plus rapide).

Préférentiellement, les buses présentent une fréquence d'ouverture/fermeture de 10 à 100 Hertz.

L'objet de la présente invention concerne selon un deuxième aspect un engin de pulvérisation comprenant un système de pulvérisation tel que décrit ci-dessus.

Un tel engin est du type par exemple un engin d'épandage.

Ainsi, par ses différentes caractéristiques techniques fonctionnelles et structurelles décrites ci-dessus, on dispose d'un système de pulvérisation buse à buse efficace qui assure une pulvérisation optimale d'un alignement de végétaux par exemple une vigne ou un coteau.

### Brève description des figures annexées

D'autres caractéristiques et avantages de la présente invention ressortiront de la description ci-dessous, en référence aux figures annexées qui en illustrent plusieurs exemples de réalisation dépourvu de tout caractère limitatif et sur lesquelles :
[Fig.1] La figure 1 représente une vue schématique de dessus d'un système de pulvérisation selon un premier exemple de réalisation configuré pour pulvériser un liquide sur une pluralité d'alignements de végétaux à traiter tels que par exemple des vignes ;
[Fig.2] La figure 2 représente une vue schématique de la face avant d'une paire de descentes de pulvérisation d'un système de pulvérisation conforme à la figure 1 ;
[Fig.3] La figure 3 représente une vue schématique de dessus d'un système de pulvérisation selon un deuxième exemple de réalisation configuré pour pulvériser un liquide sur une pluralité d'alignements de végétaux denses à traiter tels que par exemple des arbres ;
[Fig.4] et [Fig.5] Les figures 4 et 5 représentent chacune une vue schématique de la face avant d'un système de pulvérisation selon un troisième exemple de réalisation configuré pour pulvériser un liquide sur une pluralité d'alignements de végétaux à traiter tels que par exemple des arbres à traiter ;
[Fig.6] La figure 6 représente une vue schématique en perspective d'une descente équipée d'un système de pulvérisation conforme par exemple à la figure 2 ;
[Fig.7] La figure 7 représente une vue schématique illustrant l'architecture d'un système de pulvérisation selon la présente invention.
[Fig.8] La figure 8 représente une vue schématique d'un système de pulvérisation selon un quatrième exemple de réalisation du type mono-rampe.

### Description détaillée

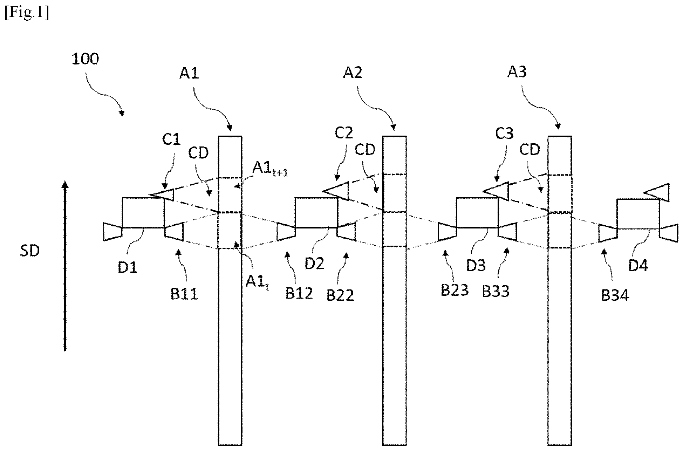

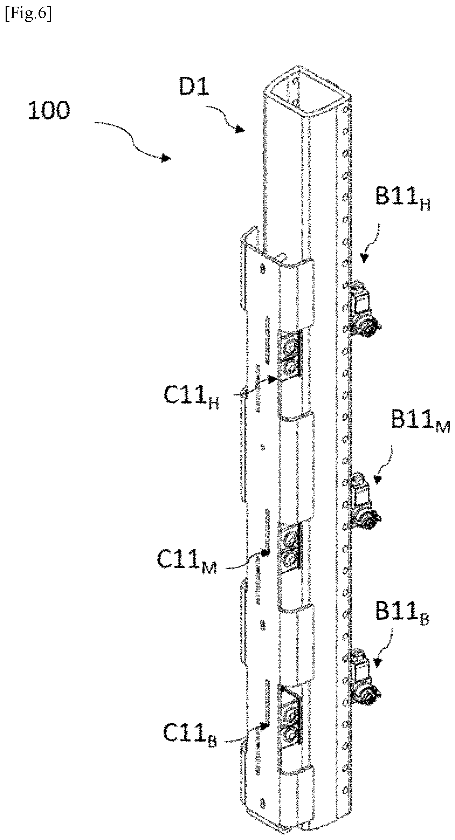

Un système de pulvérisation buse à buse selon plusieurs exemples de réalisation de la présente invention ainsi que le véhicule associé vont maintenant être décrits dans ce qui va suivre en référence conjointement aux figures 1 à 8.

Au préalable, rappelons ici que, pour qu'un système de pulvérisation soit réactif et puisse pulvériser de façon optimale la surface foliaire à traiter, il est souhaitable que chaque électrovanne connectée à la buse soit capable de s'ouvrir rapidement (temps de réponse de l'électrovanne de quelques millisecondes) et comprend de préférence une chambre présentant un volume faible, appelé aussi volume de chambre mort, de manière à constituer un jet parfait lors de chaque ouverture.

Pour couvrir la zone à traiter (conique) en fonction de la surface détectée, il est souhaitable que le jet soit instantanément (ou quasi-instantanément) de forme triangulaire.

On parle aussi de jet parfait.

Pour atteindre cet objectif, il est souhaitable que le volume mort contenu entre la sortie de l'électrovanne et la buse soit suffisamment petit pour que le temps de mise sous pression de ce volume depuis la pression atmosphérique, à la pression idéale de la buse pour obtenir un jet conique (généralement trois bars), soit inférieur au temps entre la détection de la cible, et le passage devant la buse de celle-ci lorsque le jet est parfaitement constitué, symboliquement appelé vitesse d'avancement.

Comme expliqué en préambule de la demande, on connaît dans l'état de la technique le document FR3099886 qui propose l'utilisation d'un capteur à ultrasons pour la détection de surface foliaire et l'activation de buses.

Le document FR3099886 divulgue plus particulièrement un module de détection comprenant une série de capteurs à ultrasons positionnés perpendiculairement par rapport à la végétation (soit parallèlement aux buses).

Dans ce document, le système ne tient pas compte de la vitesse d'avancement, ce qui impose d'avoir un système temps réel s'affranchissant des temps de pilotage, d'ouverture de vanne et de constitution du jet.

Le Demandeur soumet que le système suggéré dans ce document FR3099886 ne peut pas fonctionner aussi facilement que ce qui est décrit par son auteur.

Le système proposé dans ce document propose en effet une configuration classique avec des buses et des capteurs dont les temps de détection, de commutation de vanne et de mise sous pression à trois bars de la buse sont de plusieurs millisecondes.

Or, un tel système avec des capteurs ultrasons ne peut pas fonctionner en temps réel et ne peut pas fournir un jet parfait comme celui décrit ci-dessus.

A titre exemple, pour une vitesse de cinq kilomètres par heure (soit environ : treize centimètres parcourus en une milliseconde), un porte jet électrique du type celui développé par le Demandeur équipé d'une buse métier présentant un faible volume de chambre (volume mort) obtient un jet parfait en moins d'une milliseconde contre trois cents millisecondes avec un système de buse standard telle qu'utilisé dans le document FR3099886.

En retenant les performances des buses classiques (trois cents millisecondes), on peut déterminer selon la distance de détection la distance à parcourir avant de pulvériser la cible. Comme expliqué précédemment, cette distance est proportionnelle à la distance mesurée par le capteur et le diamètre du cône de détection divisé par deux dans le sens de déplacement du véhicule d'épandage.

Autrement dit, avec un temps de constitution du jet d'environ trois cents millisecondes et en négligeant le temps de détection et le temps d'ouverture de la vanne, on peut estimer que la buse s'ouvre après que le véhicule parcourt une distance *a minima* d'environ quarante et un centimètres après avoir passé la cible à traiter.

Evidemment, plus la vitesse augmente, plus cette distance par rapport à la cible est éloignée. Ainsi, on peut considérer que la pulvérisation proposée dans ce document FR3099886 ne permet pas de traiter toute la végétation et laisse des zones non-traitées.

Ces zones non traitées sont proportionnelles au temps d'ouverture de la buse, à la capacité de la buse à fournir un jet parfait et à la vitesse d'avancement du véhicule.

Il en va de même pour la fermeture de la buse qui accusera un retard sensiblement identique. Ceci n'est pas acceptable dans le domaine de la pulvérisation lequel doit répondre à des normes sanitaires et environnementales très strictes imposant notamment de traiter toutes les zones selon des doses précises.

L'un des problèmes techniques auquel fait face l'homme du métier partant du document FR3099886 est donc de pouvoir mettre en oeuvre des capteurs performants pour détecter la présence d'une surface foliaire à traiter lors du déplacement d'un véhicule d'épandage sur une surface agricole, viticole et/ou arboricole composée d'une pluralité d'alignements de végétaux à traiter tels que par exemple des vignes, des coteaux, etc.

Cet objectif est atteint dans la présente description qui suit.

Dans les différents exemples de réalisation décrits ici en figures 1 à 5, on prévoit d'équiper un véhicule d'épandage 200 d'un système de pulvérisation 100 comportant plusieurs paires de rampes de pulvérisation verticales D1, D2, D3 etD4, encore appelées descentes, destinées à se déplacer longitudinalement de part et d'autre d'un alignement de végétaux à traiter A1, A2 et A3 (voir notamment figures 1 à 5)

Ici, par alignement de végétaux à traiter, on entend tout type de culture en rangée présentant une surface foliaire telle que par exemple des vignes, coteaux, etc.

Dans ces différents exemples décrits ici, chaque paire de descentes {D1, D2}, {D2, D3} et {D3, D4} comprend une première et une deuxième descentes équipées chacune d'au moins une buse de pulvérisation B, B1, B2, B3, B4, B5, B6, B11, B12, B22, B23, B33, B34.

Ainsi, en figure 1, la descente D1 est équipée d'une buse B11 ; la descente D2 est équipée d'une buse B12 et d'une buse B22 ; la descente D3 est équipée d'une buse B23 et d'une buse B33 ; la descente D4 est équipée d'une buse B34.

On notera dans cet exemple que la descente D1 est équipée d'une autre buse qui reste inactive ici (car en début de rampe) et que la descente D4 est elle aussi équipée d'une autre buse qui reste inactive (car en fin de rampe).

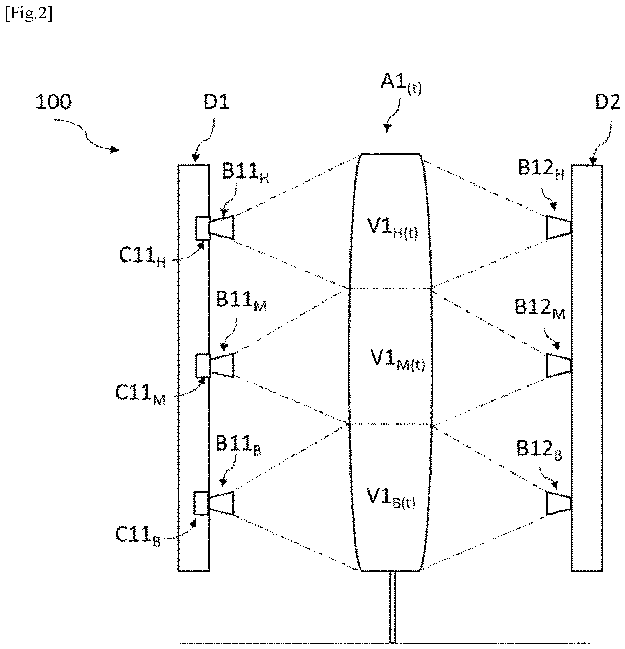

On comprend dans cette figure 1 que :
- la première paire de buses B11 et B12 est associée à la première paire de rampes {D1, D2} ;
- la deuxième paire de buses B22 et B23 est associée à la deuxième paire de rampes {D2, D3} ; et que
- la troisième paire de buses B33 et B34 est associée à la troisième paire de rampes {D3, D4}. En figure 2, on peut visualiser une paire de descentes D1 et D2.

Ici, la première descente D 1 comprend trois buses B11_{H}, B11_{M} et B11_{B} réparties verticalement à intervalles réguliers le long de la descente D1 de manière à pouvoir asperger la totalité de la surface foliaire des végétaux selon une face des végétaux d'un alignement. La surface foliaire est ici composée de trois sections verticale V1_{H}, V1_{M} et V1_{B}.

Dans cette figure 2, les trois buses B11_{H}, B11_{M} et B11_{B} de la descente D1 sont donc étagées en hauteur pour asperger respectivement chacune des trois sections V1_{H}, V1_{M} et V1_{B}. Toujours dans cette figure 2, la deuxième descente D2 comprend quant à elles trois buses B12_{H}, B12_{M} et B12_{B} disposées de la même façon le long de la descente D2 de manière à être en regard des buses B11_{H}, B11_{M} et B11_{B} de la première descente D1 et pouvoir ainsi asperger la totalité de la surface foliaire des végétaux selon l'autre face des végétaux de l'alignement. Les buses (B11_{H}, B11_{M}, B11_{B}) et (B12_{H}, B12_{M}, B12_{B}) d'une même descente respectivement D1 et D2 sont ici séparées d'une distance de séparation laquelle est adaptable et est fonction du type de végétaux à traiter, des buses de pulvérisation utilisées (forme du jet de pulvérisation) et de la largeur entre deux alignements de la surface agricole qui définit l'écartement entre deux descentes d'une même paire de descentes.

On comprend ici que l'ensemble des buses B11_{H}, B11_{M}, B11_{B}, B12_{H}, B12_{M} et B12_{B} est disposé de part et d'autre de l'alignement A1 de manière à pouvoir asperger la totalité de la surface foliaire des végétaux de l'alignement A1.

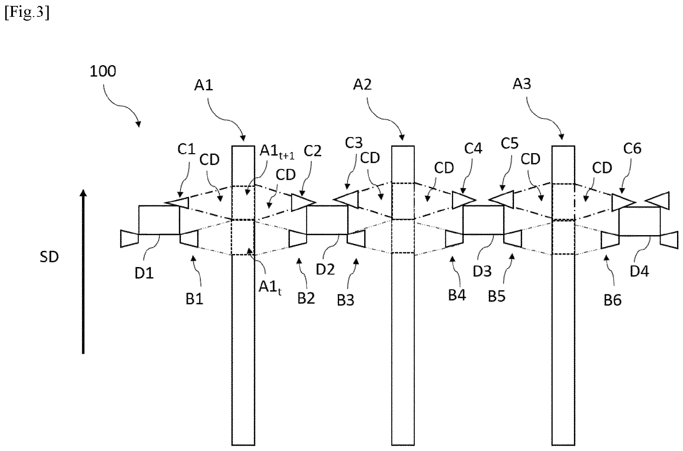

En figure 3, on retrouve sensiblement la même configuration de buses que pour la figure 1.

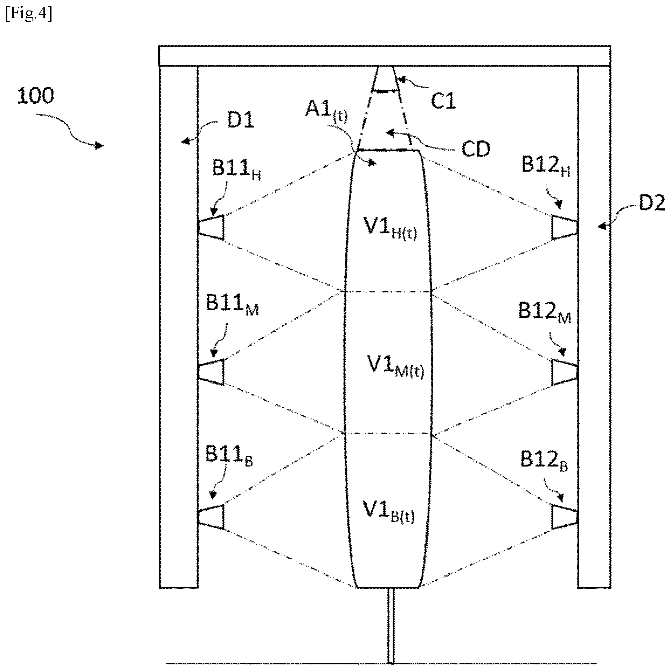

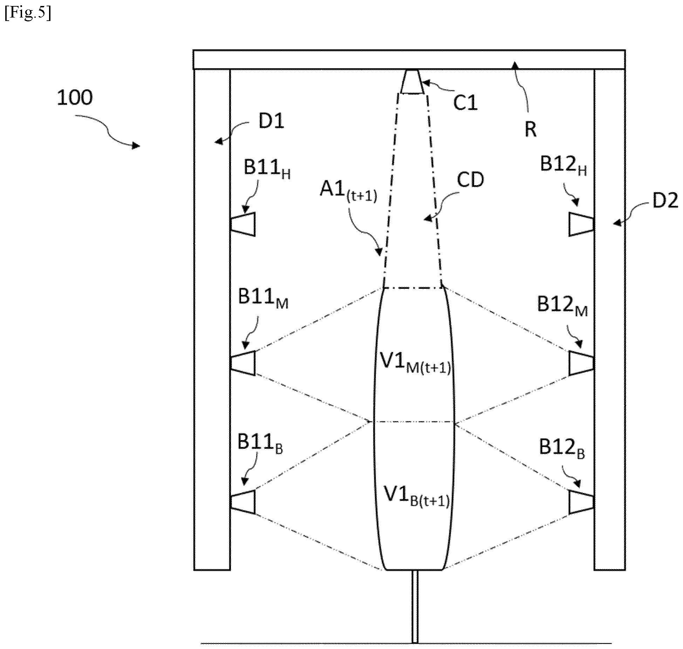

Il en est de même pour l'agencement des buses des figures 4 et 5 qui est identique à celui de la figure 2.

Ainsi, dans chaque configuration des exemples des figures 1 à 7, les buses B, B1, B2, B3, B4, B11, B12, B22, B23, B33, B34, B11_{H}, B11_{M}, B11_{B}, B12_{H}, B12_{M} et B12_{B} d'une même paire de descentes forment deux à deux des paires de buses {B1, B2}; {B2, B3}; {B3, B4}; {B11, B12}; {B22, B23}; {B33, B34} en regard les unes par rapport aux autres pour asperger un liquide de pulvérisation sur une section verticale V1_{H}(t), V1_{M}(t), V1_{B}(t) d'une portion A1(t) de l'alignement de végétaux A1.

Pour A1(t), on comprend qu'il s'agit de la portion de l'alignement A1 à un instant t.

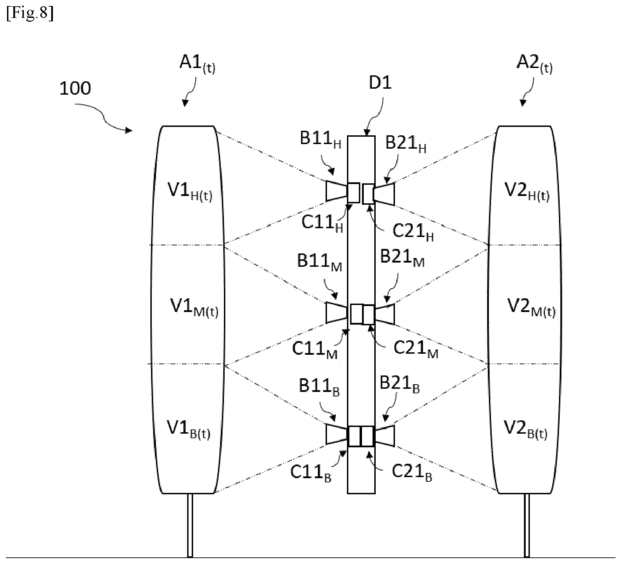

La figure 8 illustre quant à elle un système du type mono-rampe.

Dans cet exemple, le système 100 comprend une unique descente D1 avec de part et d'autre de cette rampe D1 une rangée de buses B11_{H}, B21_{H} B11_{M}, B21_{M} B11_{B}, B21_{B}. Les buses sont ici disposées par paire (B11_{H}, B21_{H}), (B11_{M}, B21_{M}) et (B11_{B}, B21_{B}), les buses d'une même paire étant positionnées à une même hauteur de la descente et orientée dans des directions opposées de manière à pouvoir asperger les alignements A1 et A2 selon toute leur hauteur. Quel que soit la configuration des buses sur les descentes, l'objectif selon la présente invention est de piloter correctement cet agencement de buses pour une pulvérisation optimale, ceci est rendu possible par une technologie ultrasons associée à une électronique de commande permettant un pilotage précis de ces buses.

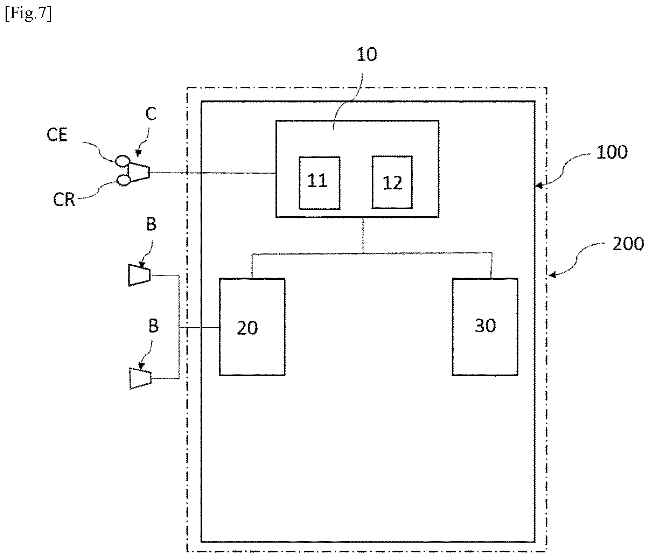

Comme illustré en figure 7, le système 100 selon chacun des exemples de réalisation décrits ici comporte un module de détection 10 et une unité de pilotage 30.

Dans chaque exemple décrit ici, le module de détection 10 comprend au moins un capteur de surface foliaire agencé pour détecter à un instant t la présence ou non d'une prochaine section verticale à traiter à un instant t+1.

Dans chacun des exemples décrits ici, le capteur de surface foliaire est un capteur à ultrasons C, C1, C2, C3, C4, C5, C6, C11 lequel est capable de détecter par ultrasons la présence d'une prochaine section verticale section V1_{H}(t+1), V1_{M}(t+1), V1_{B}(t+1) à traiter dans un cône de détection déterminé CD.

Comme indiqué précédemment, l'homme du métier pourrait ici envisager d'utiliser d'autres types de capteurs (laser/lidar, capteur infrarouge, caméra, radar hyperfréquence, etc.).

Comme illustré en figures 1 à 5 et 8, le capteur à ultrasons C, C1, C2, C3, C4, C5, C6, C11 et C21 comprend une cellule émettrice CE qui est capable d'émettre un signal à ultrasons selon un cône de détection CD et une cellule réceptrice CR qui est capable de recevoir le signal à ultrasons en écho dudit signal émis.

Cette technologie utilisant des capteurs bi-cellules est appréciée ici pour réduire (considérablement) la zone morte de détection (distance de détection courte, voire en contact avec la cellule) et permettre une détection optimisée.

Dans chacun des exemples décrits ici, le système 100 comprend en outre une unité de pilotage 30 (par exemple un processeur ou équivalent) configurée pour piloter indépendamment l'activation de chaque paire de buses {B1, B2}; {B2, B3}; {B3, B4}; {B11, B12}; {B22, B23}; {B33, B34} sur réception d'un signal de présence d'une prochaine section V1_{H}(t+1), V1_{M}(t+1), V1_{B}(t+1) à traiter.

Dans les exemples décrits ici, les buses B, B1, B2, B3, B4, B11, B12, B22, B23, B33, B34, B11_{H}, B11_{M}, B11_{B}, B12_{H}, B12_{M}, B12_{B}, B21_{H}, B21_{M} et B21_{B} sont de préférence à débit variable et sont du type PWM (on pourra aussi prévoir des buses du type ON/OFF dans certaines variantes) et sont pilotées électriquement par l'unité de pilotage 30 pour actionner et déclencher l'ouverture de chaque buse lors d'un cycle d'ouverture/fermeture de celle-ci. Dans ces exemples, on prévoit une fréquence d'ouverture/fermeture de 10 à 100 Hertz pour chaque buse.

Dans le premier exemple de réalisation de la présente invention illustré en figure 1, on dispose donc d'un système 100 avec des paires de descentes {D1, D2}; {D2, D3}; {D3, D4} comprenant des paires de buses {B11, B12}; {B22, B23}; {B33, B34} positionnées en face à face.

La figure 2 propose une vue de face.

On y distingue, pour chaque paire de descentes, des paires de buses {B11_{H}, B12_{H}}, {B11_{M}, B12_{M}} et {B11_{B}, B12_{B}} qui se répartissent selon la hauteur des descentes D1 et D2en fonction du végétal à traiter.

Ceci est particulièrement avantageux dans le domaine de la viticulture qui peut nécessiter trois à cinq étages de buses, voire plus pour d'autres types de culture. Dans l'exemple de ces figures 1 et 2, on note que chaque paire de buses {B11, B12}, {B22, B23 }, {B33, B34}, {B11_{H}, B12_{H}}, {B11_{M}, B12_{M}} et {B11_{B}, B12_{B}} est associée à un unique capteur à ultrasons. Dans la figure 1, la paire de buses {B11, B12} est associée au capteur C1 ; la paire de buses {B22, B23} est associée au capteur C2 ; la paire de buses {B33, B34} est associée au capteur C3.

Dans la figure 2 reposant sur le même principe, la paire de buses {B11_{H}, B12_{H}} est associée au capteur C11_{H}; la paire de buses {B11_{M}, B12_{M}} est associée au capteur C11_{M} ; la paire de buses {B11_{B}, B12_{B}} est associée au capteur C11_{B}.

Ainsi, dans ces exemples des figures 1 et 2, chaque capteur C1, C2, C3, C11_{H}, C11_{M}, C11_{B} est capable à l'instant t de détecter la section verticale de la prochaine portion d'alignement à traiter à l'instant t+1 pour chaque paire de buses à laquelle il est associé.

Un tel capteur permet donc de détecter à l'avance la prochaine section verticale à traiter par la paire de buses associée.

En figure 8 (mode mono-rampe), il est prévu de coupler à chaque buse B11_{H}, B11_{M}, B11_{B}, B21_{H}, B21_{M} et B21_{B} un capteur C11_{H}, C11_{M}, C11_{B}, C21_{H}, C21_{M} et C21_{B}. En figure 3, il est également prévu de coupler un capteur C1, C2, C3, C4, C5, C6 pour chaque buse B1, B2, B3, B4, B5, B6 du système 100.

Pour améliorer la détection, on prévoit dans cet exemple d'orienter chaque capteur de quinze degrés vers l'avant par rapport au sens de déplacement SD du véhicule 200 de manière à anticiper la détection des cycles.

Cet angle est fonction de la vitesse d'avancement et des temps de détection et de pilotage connus des vannes.

On comprend ici qu'il est souhaitable de réaliser un paramétrage précis du système (buses/capteur) pour garantir l'ouverture de chaque buse précisément sur la cible (voire quelques centimètres avant d'atteindre la cible) et déclencher la fermeture juste après avoir dépassé la cible (voire quelques centimètres après avoir atteint la cible).

Il est donc requis de déterminer cet angle en fonction de ces paramètres.

Outre les caractéristiques des buses et des capteurs, ce paramétrage peut également prendre en considération les caractéristiques de la surface à traiter (écartement entre les alignements, hauteur des végétaux à traiter, vitesse de déplacement du véhicule, etc.).

On pourra également envisager un calculateur qui adapte ces paramètres automatiquement pendant un temps de travail et gère le réglage de cet angle en conséquence.

On notera ici que le système électronique associé aux capteurs ultrasons est capable de recevoir une multitude d'échos, même éloignés (multi-échos). Il est donc prévu la mise en oeuvre d'un filtre de distance 11 ne retenant que les échos dont la distance est inférieure à une distance seuil prédéterminée.

Dans une solution à trois capteurs à ultrason avec trois paires de buses « haut », « milieu » et « bas » comme illustrée en figures 2 et 7 notamment, il est prévu la mise en oeuvre de moyens d'activation 12 (un processeur par exemple ou un microcontrôleur) qui configurés pour activer de façon asynchrone les capteurs de surface foliaire C11_{H}, C11_{M} et C11_{B} associés à des paires de buses adjacentes, c'est-à-dire par exemple les paires de buses du haut {B11_{H},

B12_{H}}, et du milieu {B11_{M}, B12_{M}} ou les paires de buses du milieu {B11_{M}, B12_{M}} et du bas {B11_{B}, B12_{B}}.

Une activation asynchrone de ces capteurs C11_{H}, C11_{M} et C11_{B} est particulièrement intéressante et réduit les erreurs de détection puisque les cônes respectifs de détection CD de chacun des capteurs ne se chevauchent pas.

De tels moyens d'activation asynchrones sont également prévus pour l'exemple de réalisation de la figure 8 avec des capteurs C11_{H}, C11_{M}, C11_{B}, C21_{H}, C21_{M} et C21_{B} qui sont disposés le long de l'unique descente D1 et qui fonctionnent également de façon asynchrone pour éviter les erreurs de détection. On notera ici que, dans le document FR3099886, il est prévu de faire fonctionner tous les capteurs à ultrasons simultanément. Ceci induit des erreurs de détection : en effet, rien n'empêche que le capteur du milieu reçoive un écho du capteur du dessus ou du dessous par réflexion multi-échos dans des distances cohérentes de détection, entraînant des ouvertures intempestives.

Pour éviter ce phénomène de chevauchement, la présente invention avec la présence de des moyens d'activation 12 vise à alterner les émissions entre les capteurs.

Ainsi, les moyens 12 permettent de commander l'activation des capteurs de manière à ce que celui du milieu fonctionne pendant que les deux autres sont en « veille », et inversement. Dans cet exemple de la figure 1, le capteur du milieu C11_{M} ne détectera alors que son écho lors d'un cycle d'activation et les deux autres capteurs C11_{H} et C11_{B} seront en veille pendant ce cycle tandis que, lors d'un autre cycle d'activation, les capteurs C11_{H} et C11_{B} fonctionneront et ne détecteront que leur écho, le capteur du milieu C11_{M} étant en veille.

Il en est de même pour le fonctionnement des capteurs C11_{M} et C21m du milieu par rapport au capteurs C11_{H},C11_{B} ,C21_{H} et C21_{B} du haut et du bas.

Un tel pilotage asynchrone des capteurs à ultrasons est particulièrement efficace et garantit une bonne précision de détection sans erreur.

Dans une solution avec quatre capteurs disposés sur la hauteur d'une face d'une même descente (non illustré ici), les moyens d'activation 12 des capteurs sont configurés pour alterner le fonctionnement de la détection entre les capteurs paires et les capteurs impaires, toujours pour éviter le chevauchement des cônes de détection CD.

Dans tous les cas, ce pilotage asynchrone est réalisé de manière à obtenir une alternance de détection 30 à 100 fois par secondes (soit 30 à 100Hz). Cette fréquence est fonction de la vitesse d'avancement de la machine de manière à garantir une précision de détection et un déclenchement précis de la pulvérisation.

Une alternative envisagée pour éviter cette activation asynchrone est d'émettre à des fréquences différentes simultanément, dans ce cas chaque capteur reçoit et traite sa propre fréquence d'émission.

L'exemple de réalisation de la figure 3 comprend l'ensemble des caractéristiques techniques de l'exemple de réalisation des figures 1 et 2 ; ce dernier diffère toutefois de celui-ci en ce qu'il est prévu un capteur à ultrasons par buse : la buse B1 est couplée avec le capteur C1 ; la buse B2 est couplée avec le capteur C2 ; la buse B3 est couplée avec le capteur C3 ; la buse B4 est couplée avec le capteur B4 ; la buse B5 est couplée avec le capteur B5 et la buse B6 est couplée avec le capteur B6. On comprend donc ici que le fonctionnement de chaque buse est conditionné par la détection du capteur qui lui est associé.

Une telle variante est souhaitable lorsqu'il s'agit de traiter un végétal présentant un volume important de surface foliaire à traiter comme c'est le cas par exemple dans l'arboriculture. On prévoit un fonctionnement identique sur l'exemple avec le mode mono-rampe illustré en figure 8.

Dans cet exemple de la figure 8, la buse B11_{H} est couplée avec le capteur C11_{H} ; la buse B21_{H} est couplée avec le capteur C21_{H} ; la buse B11_{M} est couplée avec le capteur C11_{M}; la buse B21_{M} est couplée avec le capteur C21_{M}; la buse B11_{B} est couplée avec le capteur C11_{B} ; la buse B21_{B} est couplé avec le capteur C21_{B}.

L'exemple des figures 4 et 5 diffère quant à lui des autres exemples des figures 1 à 3 et 8 en ce que le capteur à ultrasons C1 pour la détection foliaire est positionné en surplomb par rapport aux végétaux à traiter.

Dans cet exemple, le capteur C1 est supporté par une rampe horizontale R.

L'utilisation d'un unique capteur C1 comme illustré en figures 4 et 5 est adaptée à certain type de culture.

Il est toutefois souhaitable d'y intégrer un calculateur pour déterminer la hauteur de la surface foliaire à traiter, cette hauteur étant calculée en fonction du temps parcourue par le signal ultrason émis par la cellule émettrice et reçu par la cellule réceptrice.

Cette variante prévoyant d'équiper la rampe R d'un capteur à ultrason pour chaque paire de descente permet de piloter les paires de buses par hauteur pour chaque descente.

La présente invention offre ainsi un système de pulvérisation 100 destiné à équiper un véhicule d'épandage qui permet d'asperger efficacement les surfaces foliaires à l'aide d'une technologie de capteurs à ultrasons adaptée spécifiquement pour l'usage de la pulvérisation et répondant ainsi aux exigences et réglementations de ce domaine qui impose désormais une bonne précision afin de garantir une pulvérisation optimale tenant compte des contraintes liées notamment au matériel utilisé et ses performances, à la typologie des végétaux à traiter et à la vitesse de déplacement du véhicule d'épandage.

On remarquera ici qu'il est astucieux de combiner la présente invention avec une technologie d'ajustement instantanée de la pression fonction du nombre d'ouverture/fermeture de buse électrique (soit à l'aide d'une vanne de régulation électrique PWM et/ou une « vanne à air » tarée à la pression de travail (3 bars) et contrôlée par capteur de pression ou tout autre système de régulation rapide).

Selon une telle combinaison, le calculateur de la régulation électronique ainsi que le calculateur central de la détection de surface foliaire communiquent entre eux pour :
- mesurer la surface travaillée de la parcelle ;
- mesurer la surface réellement traitée de la parcelle ;
- calculer le ratio d'économie surface travaillé / surface détectée et traitée ;
- dans le cas de l'utilisation d'une antenne GPS, associer l'ouverture fermeture pulvérisation à une coordonnée GPS et ainsi déterminer précisément les zones traitées et leurs hauteurs (traçabilité) afin d'établir une cartographie de la surface traitée ;
- mesurer précisément le litrage épandu dans le but de gérer le niveau de cuve et les remplissages ;
- utiliser l'information vitesse roue et/ou GPS pour calculer les anticipations d'ouverture/fermeture ;
- à vitesse nulle, couper automatiquement la pulvérisation ;
- passer en mode manuel pour différentes raisons ;
- informer la régulation d'un capteur défectueux et suggérer à l'utilisateur un passage en mode manuel ;
- paramétrer les sensibilités de détection capteur/capteur ;
- paramétrer les plages de détection capteur/capteur ;

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée

## Revendications

1. Système de pulvérisation (100) pour véhicule du type pulvérisateur (200) se déplaçant sur une surface comprenant un alignement de végétaux (A1, A2, A3) à traiter,
ledit système (100) comportant au moins une rampe de pulvérisation verticale (D1, D2, D3, D4) équipée d'au moins une buse (B, B1, B2, B3, B4, B5, B6, B11, B12, B22, B23, B33, B34) agencée pour asperger un liquide de pulvérisation selon un axe de pulvérisation déterminé sensiblement perpendiculaire au sens de déplacement (SD) du véhicule (200),
ledit système (100) comportant :
a) un module de détection (10) comprenant au moins un capteur de surface foliaire (C, C1, C2, C3, C4, C5, C6, C11, C21) associé à ladite au moins une buse (B, B1, B2, B3, B4, B5, B6, B11, B12, B22, B23, B33, B34) et configuré pour détecter la présence ou non d'une prochaine section verticale (V1_{H}(t+1), V1_{M}(t+1), V1_{B}(t+1)) d'un alignement de végétaux (A1, A2, A3) à traiter dans l'axe de pulvérisation de ladite au moins une buse (B, B1, B2, B3, B4, B5, B6, B11, B12, B22, B23, B33, B34) ; et
b) une unité de pilotage (30) configurée pour piloter indépendamment l'activation de ladite au moins une buse (B, B1, B2, B3, B4, B5, B6, B11, B12, B22, B23, B33, B34) sur réception d'un signal de présence d'une prochaine section (V1_{H}(t+1), V1_{M}(t+1), V1_{B}(t+1)) à traiter.

2. Système (100) selon la revendication 1, dans lequel le capteur de surface foliaire (C, C1, C2, C3, C4, C5, C6, C11, C21) est du type capteur à ultrasons lequel est capable de détecter par ultrasons la présence d'une prochaine section verticale section (V1_{H}(t+1), V1_{M}(t+1), V1_{B}(t+1)) à traiter dans un cône de détection déterminé (CD).

3. Système (100) selon la revendication 2, dans lequel le capteur à ultrasons (C, C1, C2, C3, C4, C5, C6, C11, C21) comprend une cellule émettrice (CE) apte à émettre un signal à ultrasons selon un cône de détection (CD) et une cellule réceptrice (CR) apte à recevoir le signal à ultrasons en écho dudit signal émis.

4. Système (100) selon la revendication 2 ou 3, dans lequel le module de détection (10) comprend des moyens de filtrage (11) configurés pour filtrer les signaux reçus en écho en fonction d'une distance déterminée.

5. Système selon l'une quelconque des revendications précédentes, lequel comprend une paire de rampes de pulvérisation verticales (D1, D2, D3, D4) destinées à se déplacer de part et d'autre d'un alignement de végétaux à traiter (A1, A2, A3), chaque paire de rampes ({D1, D2}; {D2, D3}; {D3, D4}) comprenant une première et une deuxième rampes équipées chacune d'au moins une buse (B, B1, B2, B3, B4, B5, B6, B11, B12, B22, B23, B33, B34), lesdites au moins une buse (B, B1, B2, B3, B4, B11, B12, B22, B23, B33, B34) des première et deuxième rampes (D1, D2, D3, D4) formant ensemble une paire de buses ({B1, B2}; {B2, B3}; {B3, B4}; {B11, B12}; {B22, B23}; {B33, B34}) en regard les unes par rapport aux autres pour asperger le liquide de pulvérisation de part et d'autre de la section verticale (V1_{H}(t), V1_{M}(t), V1_{B}(t)) d'une portion (A1(t))) de l'alignement de végétaux (A1, A2, A3).

6. Système (100) selon la revendication 5, dans lequel le module de détection (10) comprend, pour chaque paire de rampes ({D1, D2}; {D2, D3}; {D3, D4}), un unique capteur de surface foliaire (C1) positionné en partie médiane d'un support horizontal (R) reliant entre elles les première et deuxième rampes ({D1, D2}; {D2, D3}; {D3, D4}) par le dessus, ledit capteur de surface foliaire (C1) étant orienté vers le bas.

7. Système (100) selon la revendication 6, dans laquelle ledit capteur de surface foliaire (C1) est configuré pour fournir une information relative à une hauteur de la portion de l'alignement de végétaux à traiter de manière à ce que l'unité de pilotage (30) pilote l'activation de la ou des paires de buses pour asperger ladite portion sur toute ladite hauteur.

8. Système (100) selon la revendication 4, dans lequel le module de détection (10) comprend, pour chaque paire de buses ({B1, B2}; {B2, B3}; {B3, B4}; {B11, B12}; {B22, B23}; {B33, B34}), un capteur de surface foliaire (C, C1, C2, C3, C4, C5, C6, C11) positionné au voisinage de l'une des deux buses (B, B1, B2, B3, B4, B11, B12, B22, B23, B33, B34).

9. Système (100) selon l'une quelconque des revendications précédentes, dans lequel le module de détection (10) comprend des moyens d'activation (12) configurés pour activer chaque capteur de surface foliaire (C, C1, C2, C3, C4, C5, C6, C11, C21) indépendamment les uns des autres.

10. Système (100) selon la revendication 9, dans lequel les moyens d'activation (12) sont configurés pour activer de façon asynchrone les capteurs de surface foliaire (C, C1, C2, C3, C4, C5, C6, C11) associés à des buses adjacentes ou des paires de buses adjacentes.

11. Système (100) selon la revendication 9 ou 10, dans lequel les moyens d'activation (12) sont configurés pour activer les capteurs de surface foliaire selon une fréquence d'activation, de préférence comprise entre 30 et 100Hz, modulée en fonction d'au moins un paramètre déterminé tel que par exemple la vitesse de déplacement du système et/ou le type de buse.

12. Système (100) selon la revendication 9, dans lequel les moyens d'activation (12) sont configurés pour que chaque capteur de surface foliaire (C, C1, C2, C3, C4, C5, C6, C11, C21) émette de façon synchrone selon une fréquence d'émission déterminée différente.

13. Système (100) selon l'une quelconque des revendications précédentes, dans lequel ledit au moins un capteur de surface foliaire (C, C1, C2, C3, C4, C5, C6, C11, C21) est :
- positionné en aval du sens de déplacement (SD) par rapport aux buses ({B1, B2}; {B2, B3}; {B3, B4}; {B11, B12}; {B22, B23}; {B33, B34}) ; et/ou
- orienté selon un angle d'incidence compris entre 0 et 50 degrés par rapport à un axe de pulvérisation des buses, de préférence 15 degrés.

14. Engin de pulvérisation (200), notamment engin agricole de type véhicule d'épandage, comprenant un système de pulvérisation (100) selon l'une quelconque des revendications 1 à 13.
